# EUROPEAN PATENT SPECIFICATION

(11) **EP 0 748 751 B1**
(45) Date of publication and mention of the grant of the patent: **22.12.1999**
(21) Application number: 96201570.7
(22) Date of filing: 05.06.1996
(51) Int. Cl.: B65G 47/08, B65G 17/26, B65G 47/51, B65G 19/02

(54) **Apparatus for automatically handling products or packs**
Vorrichtung zur automatischen Handhabung von Produkten oder Paketen
Dispositif pour la manipulation automatique de produits ou paquets

(30) Priority: 12.06.1995 IT MI951240
(43) Date of publication of application: 18.12.1996
(73) Proprietor: VARA S.r.l., 22030 Orsenigo, Como (IT)
(72) Inventor: Ramacciato, Angelo, 22040 Anzano Del Parco (Como) (IT)
(74) Representative: Fusina, Gerolamo

(56) References cited:
- EP-A- 0 007 231
- EP-A- 0 316 990
- EP-A- 0 594 917
- DE-A- 4 315 391
- FR-A- 1 393 472
- FR-A- 2 227 200
- FR-A- 2 391 126

## Description

This invention relates to an apparatus for automatically handling products or packs.

In manipulating and boxing products or packs they always have to be arranged and fed in a predetermined sequence to the subsequent manipulation or boxing stages. In this respect such products or packs have to be fed in a predetermined number at predetermined distances apart to robotized manipulators which grip them and, for example, arrange them in containers or the like.

For this purpose various product or pack conveying, accumulation and grouping systems have been designed and constructed provided with complicated and costly devices for achieving the set object.

FR-A-2 391 126 discloses an apparatus for automatically handling packs according to the preamble of claim 1.

Such systems, besides having the aforesaid drawbacks, are of specific construction and cannot be adapted to products of different dimensions.

An object of the present invention is to provide an apparatus of the aforesaid type which, besides properly performing said functions, is both simple to operate and to construct and use.

A further object is to provide an apparatus which can be easily adapted to different sized products to be manipulated and processed.

These objects are attained, according to the present invention, by an apparatus for automatically handling products or packs according to claim 1.

Advantageously, said endless towing element can be a toothed belt which passes about respective toothed pulleys, one of these pulleys being driven by a relative motor.

The characteristics and advantages of an apparatus for automatically handling products or packs according to the present invention will be more apparent from the description thereof given hereinafter by way of non-limiting example, with reference to the accompanying schematic drawings, in which:
Figure 1 is a side elevation of an apparatus for automatically handling products or packs according to the present invention;

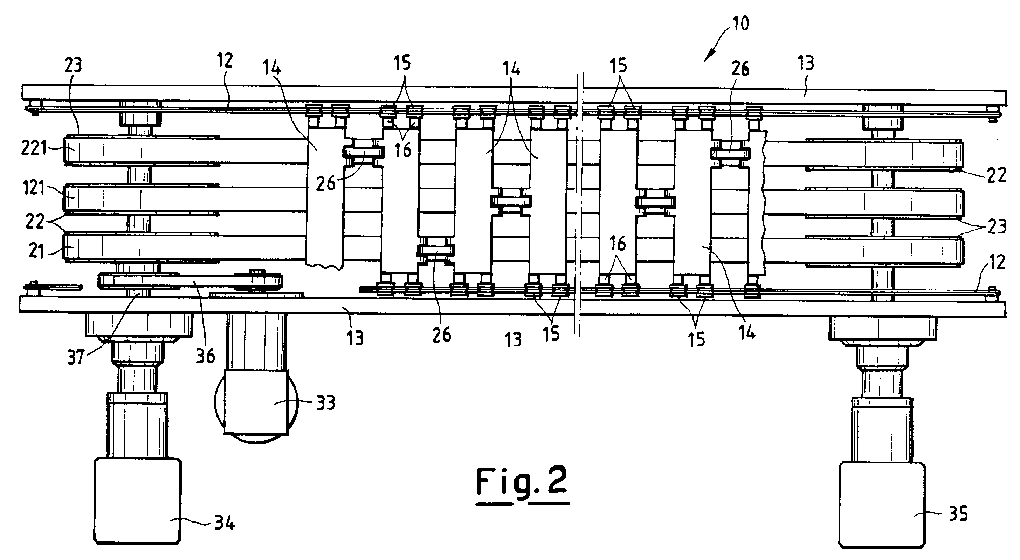

Figure 2 is a plan view from above showing the drive of the apparatus of Figure 1 and the connection between certain carriages;
Figure 3 is a section of a particular in proximity of the drive;
Figure 4 is a partly sectional enlarged view of a part of the apparatus; and
Figure 5 is a front section through one example of a carriage usable in the apparatus of the invention.
Figure 6 is an elevational enlarged view of a device for anchoring the towing belt in the apparatus of the invention;
Figure 7 is a plan view from above showing the apparatus of Figure 6.

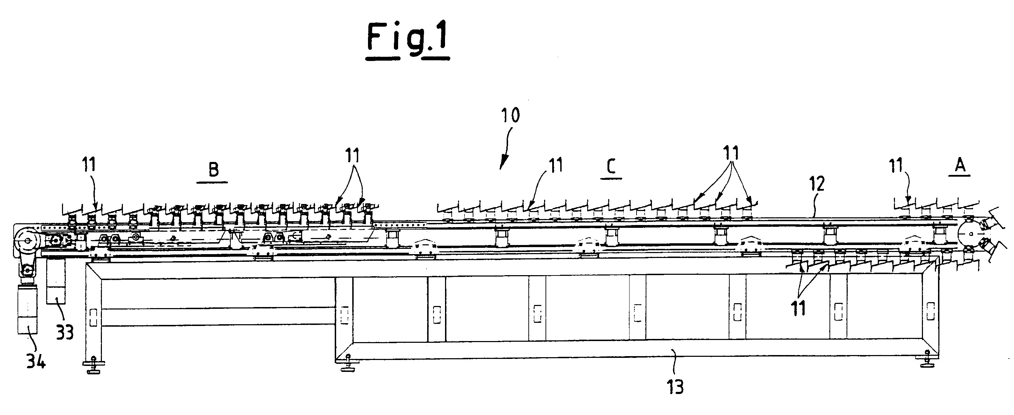

In Figure 1 the reference numeral 10 indicates one embodiment of an apparatus for automatically handling products or packs constructed in accordance with the invention, showing a certain number of carriages 11 arranged in this case as three carriage groups.

These carriage groups, each comprising fifteen carriages 11 in this example, but the number of which can be varied at will, are slidable on guide elements 12, such as continuous section bars, fixed to the two sides of a support structure 13 for the apparatus. The guide elements 12 are arranged as an endless ring to form a fixed path for the carriages 11.

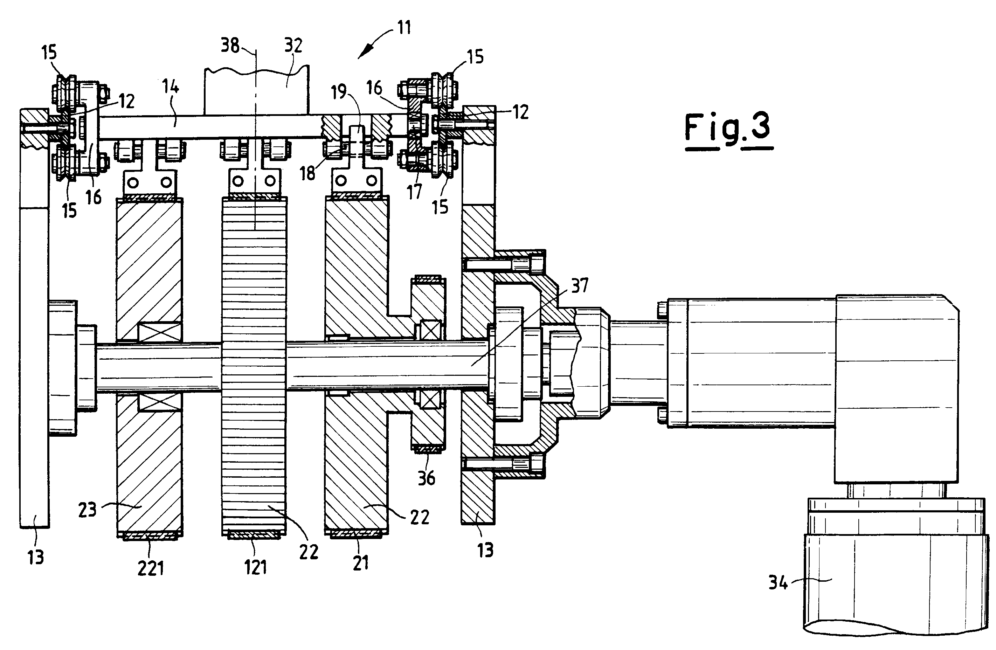

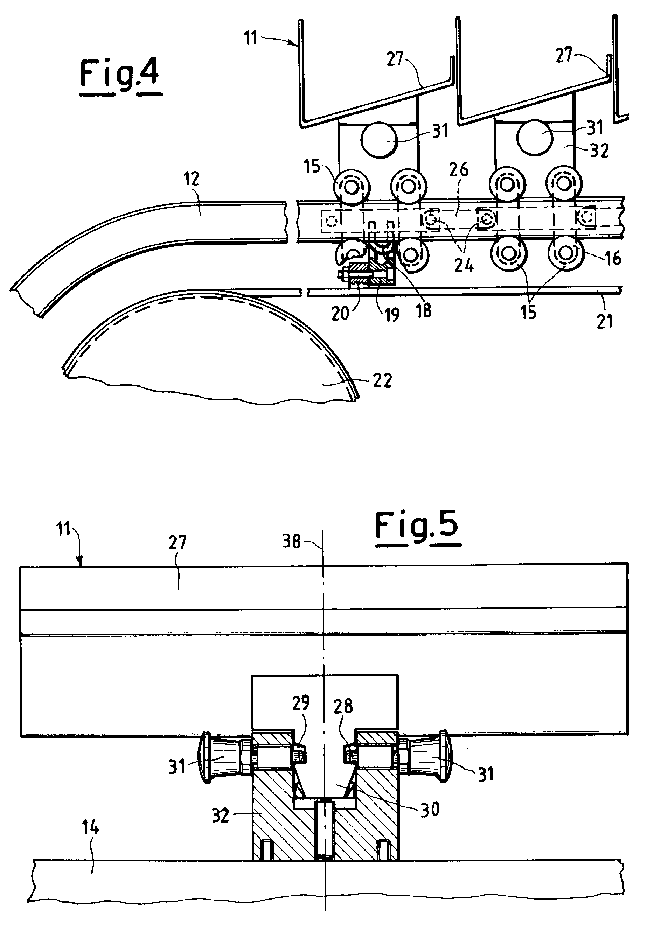

As can be better seen from Figures 3 and 4, each carriage 11 comprises a crosspiece or body 14 provided with four wheels or bearings 15 which roll on the guide elements 12. The wheels 15 are positioned in pairs at the ends of vertical levers 16 pivoted centrally at 17 to the crosspiece 14 and able to swivel in order to adapt during travel to the flat or curved shape of the appropriate guide elements 12. It should be noted that in the illustrated example, at each end of the lever 16 there are two wheels each with a groove facing inwards so that it engages on the guide element 12, the cross-section through which is of irregular hexagonal profile.

From a first carriage 11 of each carriage group there downwardly extends a pin 18 retained on relative supports and arranged to engage in a fork element 19. The fork element 19 is fixed by bolts to a projecting appendix 20 which extends from a toothed belt 21. The toothed belt 21 forms a continuous towing element and is arranged as an endless ring about two toothed end pulleys, one 22 being the drive pulley and the other 23 being the driven pulley. It can also be seen that those carriages 11 subsequent to the first in the various groups are connected to the first carriage and together one after another by pins 24 insertable into holes in plates 26. The plates 26, known as links, form an articulated connection between two successive carriages which is freely releasable, so as to be able to vary the number of constituent carriages of each group. Moreover by replacing the plates 26 by other longer or shorter plates the distance between axes of the various carriages of a group can be quickly changed to adapt to requirements.

On each carriage 11 there is positioned a suitably shaped carrier element or saddle 27 extending through the entire width of the apparatus above the various belts present therein, as will be seen hereinafter. The carrier element 27 can be of variable size and is fixed in position on the carriage 11 by a releasable fixing element such as that shown in Figure 5. In this example the releasable fixing element comprises engagement pins 28 insertable into seats 29 provided in a lower extension 30 of the carrier element 27. The pins 28 are handled by gripping knobs 31 located on a component 32 rigid with the crosspiece 14 of the carriage 11 and when at rest are maintained engaged in said seats 29 by elastic elements, not shown in the figure.

In the apparatus of the present invention at least two of said belts must be provided to be able to drive at least two groups of carriages. In the example three belts are provided, indicated by 21, 121 and 221 respectively, and extend about end pulleys similar to the said drive pulley 22 and driven pulley 23.

Each of the belts 21, 121, 221 drives a relative first carriage 11 and the group of carriages 11 connected to it, as already described for the belt 21.

Each first carriage 11 is driven by the engagement between the relative belt 21, 121 or 221 and a relative drive pulley 22. This is rotated by a relative motor 33, 34 or 35 positioned for example in the following manner.

The first motor 33 rotates the drive pulley 22 of the first belt 21 by a belt transmission 36. From the second motor 34 there emerges a shaft 37 which passes through the belt transmission 36 and through the drive pulley 22 of the first belt 21. To the shaft 37 there is rigidly connected a second drive pulley 22 about which there engages the second belt 121 which is hence made to advance.

The same shaft 37 passes through a third coaxial pulley, which in this case is a driven pulley 23, being positioned by way of bearings on the shaft 37, and about which there passes the third toothed belt 221. The third toothed belt 221 is driven by the third motor 35 which is positioned at the other end of the apparatus and rotates a drive pulley 22.

Suitable position sensors for the carriages 11 are located within the support structure, both in a loading zone indicated by A in Figure 1 and in a discharge zone indicated by B. In addition to these two loading and discharge zones A and B, which represent a minimum for an apparatus with two belts and two carriage groups, an apparatus with three belts and three carriage groups must also comprise at least one intermediate parking zone C.

In an apparatus according to the present invention, for example the products or packs to be manipulated and grouped arrive in a loading zone A by means of a conveyor, not shown, locatable on or aligned with the longitudinal axis of the apparatus or transverse thereto. In this manner the products or packs arriving one after another become located in successive carrier elements or saddles 27 of successive carriages 11 of a first group of carriages.

During this stage the first group of carriages 11 is dragged, for example stepwise or continuously, by the belt 21 driven by the motor 33. The products hence become housed in the carrier elements, and when the entire group of fifteen carriages has been loaded the entire group is advanced by the motor 33 to the discharge zone B or to the parking zone C. The products reliably enter the carrier elements 27 as these latter extend through the entire width of the apparatus.

On reaching the discharge zone, after the products have undergone compaction in the carrier elements 27 by a device, not shown, so that they assume the correct position for the next operation, the group of carriages 11 is unloaded by a withdrawal device, for example of the robotized manipulator type, also not shown.

At the same time, a second group of carriages 11, dragged by the belt 121, operated by the stepwise-rotating motor 34 is loaded. If the loading time is short, the second group, by the action of the motor 34, becomes positioned in the intermediate parking zone C ready to replace that group of carriages in the discharge zone which are being unloaded.

In the same manner the third group of carriages is activated, if present, to commence rapid manipulation of the products or packs from their feed upstream to, for example, their boxing downstream. Suitable sensors regulate the rapid start of the carriage groups between one zone and the next, and the stepping movement during the loading of the products or packs so that one carriage group does not become struck by the next.

In this manner, product movement is created with groups or group successions separated in terms of their drive and mutually correlated to optimize every movement. The various groups of carriages move independently of each other.

Moreover the carrier elements of the various carriage groups, although being positioned on different towing elements, all have the same longitudinal axis 38. This can be well seen in Figure 3. As is apparent from the described and illustrated embodiment, the entire operation is achieved with a very versatile apparatus of extremely simple structure, for example in that the carrier elements can be easily replaced by others of suitable required size.

Because of the presence of the connection elements between one carriage and the next, the groups can be rapidly formed in the desired number from a minimum of two to as many as can occupy the path formed in the structure of the apparatus, leading to its correct operation. In addition the distance between the axes of one carriage and the next of the group can be varied by replacing the intermediate plates.

Further, by acting on the release elements of the carrier element or saddle it can be replaced by another suitable for requirements, this also being achieved very rapidly.

As an alternative to toothed belts, the endless towing elements can be in the form of chains, metal or non-metal bands, belts of round cross-section, etc.

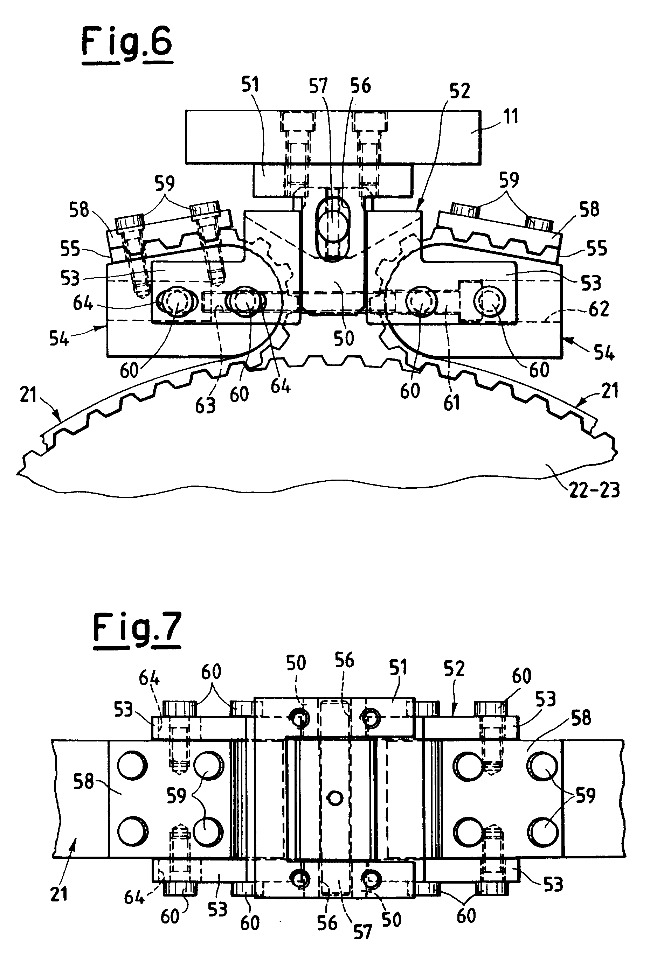

A further embodiment according to Figures 6 and 7 shows how the carriages of each group are fixed to the towing belt by means of a different anchoring device. This device is being fixed to the first carriage 11 of Figure 6 and 7 of each group of carriages in the following manner.

The device is fixed under the first carriage 11 on two arms 50 of a C-shape anchoring plate 51 by means of an inverted double T-shaped attachment element 52. This element 52 extends downwards into two forks having arms 53 able to support two rounded support elements 54 which block the free ends 55 of the belt 21.

It should be noted that the belt is not of an endless type, but two of its free ends are fixed in the required length by means of the elements cited above during the assembling stage.

On each of the two arms 50 of the anchoring plate 51, there is provided a vertical slot 56 within which a pin 57 slides, said pin 57 being fixed to the attachment element 52 by means of a slotted pin arrangement. In this way, the parts are likely to move vertically causing said parts to be arranged on the toothed pulleys 22 and 23.

The free ends 55 of the belt 21 are adjusted so as to partially pass about the supports 54 and then are fastened to them by means of toothed plates 58 which are fixable to them by means of screws 59 passing into the ends 55 of the belt 21.

Screws 60 are fastened to the two supports 54 through holes provided on the arms 53 of the forks of the attachment element 52. Said screws are caused to pass into the holes and then are screwed within threaded holes of the supports 54.

A further screw 61 causes the two supports 54 to be reciprocally positioned at a variable distance, said screw 61 being inserted into a hollow 62 of one of the two supports and then screwed into a threaded hole 63 of the other support.

One of the two supports can be positioned in a variable manner because the holes which are present on a pair of arms 53 of one of the forks of the attachment element 52 are provided with slots 64.

## Claims

1. An apparatus for automatically handling products or packs comprising a support structure (13) on which carriages (11) provided with elements (27) for carrying said products or packs are positioned, said carriages (11) being on an endless path of a relative drive, whereby said carriages (11) are grouped into at least two groups of at least two carriages (11) connected together, in each group a first carriage (11) being driven by being coupled to an independent endless towing element (21,121,221) extending about two pulleys (22,23) and driven by a respective motor (33,34,35) which can be operated stepwise or continuously between at least one loading zone (A) for said carriage groups and a discharge zone (B) for said carriage groups, characterised in that said carriages (11) are slidable on lateral guide elements (12) and that at least one second carriage is dragged by the first carriage.

2. An apparatus as claimed in claim 1, characterised in that said endless towing element is a toothed belt (21,121,221) which passes about respective toothed pulleys (22,23), one (22) of these pulleys being driven by a relative motor (33,34,35).

3. An apparatus as claimed in claim 2, characterised in that each belt (21,121,221) comprises an outwardly extending appendage (20) to which said first carriage (11) of said groups of carriages is secured.

4. An apparatus as claimed in claim 1, characterised in that said second carriage (11) of each group is secured to said first carriage (11) by a replaceable articulated connection (24,26) of variable length so as to vary the distance between the axes of said carriages.

5. An apparatus as claimed in claim 1, characterised in that said product or pack carrier elements (27) of said at least two groups of carriages (11) extend above the width of said at least two groups of carriages.

6. An apparatus as claimed in claim 1, characterised in that each of said carriages (11), slidable on said lateral guide elements (12) along an endless path, comprises a central body (14) on which there are pivoted intermediate portions of levers (16) each carrying a pair of revolving elements or wheels (15) for rolling engagement on said guide elements (12).

7. An apparatus as claimed in claim 1, characterised in that said endless towing element (21) of a first group of carriages (11) is driven by a belt transmission (36) connected to a first motor (33) and acting on said drive pulley (22) of said first group of carriages (11), said endless towing element (121) of said second group of carriages (11) being driven by a second motor (34), the exit shaft (37) of which acts directly on said drive pulley (22) of said second endless towing member (121).

8. An apparatus as claimed in claim 1, characterised in that said endless towing element (21) of a first group of carriages (11) is driven by a belt transmission (36) connected to a first motor (33) and acting on said drive pulley (22) of said first group of carriages (11), said endless towing element (121) of said second group of carriages (11) being driven by a second motor (34), the exit shaft of which passes coaxially through said drive pulley (22) of said first group of carriages (11) to act on said drive pulley of said second endless towing element (121).

9. An apparatus as claimed in claim 1, characterised by comprising at least three carriage groups (11) of at least two carriages connected together, each carriage group being driven by a respective motor (33,34,35) which can be operated stepwise and continuously not only in correspondence with said at least one loading zone (A) for said carriage groups and one discharge zone (B) for said carriage groups, but also in correspondence with an intermediate parking zone (C), sensors being provided to control the position of said carriage groups and to selectively operate said motors (33,34,35).

10. An apparatus as claimed in claim 1, characterised in that each said product or pack carrier element (27) can be positioned on a relative carriage by means of freely removable mutual fixing elements.

11. An apparatus as claimed in claim 10, characterised in that said freely removable mutual fixing elements comprise elastically loadable engagement pins (28) provided on said carriage (11) or said carrier element (27) and insertable into seats (29) provided in said carrier element or said carriage respectively, said pins (28) being operated via gripping knobs (31).

12. An apparatus as claimed in claim 1, characterised in that said carrier elements (27) of said at least two carriage groups are located all on the same longitudinal axis.

13. An apparatus as claimed in claim 1, characterised in that said at least two carriage groups move independently of each other.

14. An apparatus as claimed in claim 2, characterised in that each belt (21,121,221) has two opposing free ends (55) which are fixed to an anchoring device (51,52) extending under said first carriage (11) of said group of carriages.

15. An apparatus as claimed in claim 14, characterised in that said anchoring device comprises an anchoring plate (51) fixable to an inverted double T-shaped attachment element (52) by means of a slotted pin arrangement (56,57), said attachment element (52) being provided with two supports (53) able to fasten the free ends (55) of said belt (21,121,221).

16. An apparatus as claimed in claim 15, characterised in that said ends (55) of said belt (21,121,221) are fixed to said supports by means of toothed plates (58) and fixing screws (59).

## Patentansprüche

1. Gerät zur automatischen Handhabung von Produkten oder Paketen mit einer Tragstruktur (13), auf der mit Elementen (27) zum Tragen der Produkte oder Pakete versehene Wagen (11) angeordnet sind, die sich auf einem Endlosweg eines entsprechenden Antriebs befinden, wodurch die Wagen (11) in mindestens zwei Gruppen von mindestens zwei miteinander verbundenen Wagen (11) gruppiert sind, wobei in jeder Gruppe ein erster Wagen (11) dadurch angetrieben wird, daß er mit einem unabhängigen Endlos-Schleppelement (21, 121, 221) gekoppelt ist, das um zwei Riemenscheiben (22, 23) verläuft und durch einen jeweiligen Motor (33, 34, 35) angetrieben wird, der zwischen mindestens einer Ladezone (A) für die Wagengruppen und einer Entladezone (B) für die Wagengruppen schrittweise oder kontinuierlich betrieben werden kann, dadurch gekennzeichnet, daß die Wagen (11) auf seitlichen Führungselementen (12) verschiebbar sind und mindestens ein zweiter Wagen durch den ersten Wagen gezogen wird.

2. Gerät nach Anspruch 1, dadurch gekennzeichnet, daß das Endlos-Schleppelement ein Zahnriemen (21, 121, 221) ist, der um jeweilige gezahnte Riemenscheiben (22, 23) verläuft, wobei eine (22) dieser Riemenscheiben durch einen entsprechenden Motor (33, 34, 35) angetrieben wird.

3. Gerät nach Anspruch 2, dadurch gekennzeichnet, daß jeder Riemen (21, 121, 221) ein sich nach außen erstreckendes Anhängsel (20) aufweist, an dem der erste Wagen (11) der Wagengruppen befestigt ist.

4. Gerät nach Anspruch 1, dadurch gekennzeichnet, daß der zweite Wagen (11) jeder Gruppe am ersten Wagen (11) durch eine austauschbare Gelenkverbindung (24, 26) mit veränderlicher Länge befestigt ist, um den Abstand zwischen den Achsen der Wagen zu verändern.

5. Gerät nach Anspruch 1, dadurch gekennzeichnet, daß die Produkt- oder Paketträgerelemente (27) der mindestens zwei Gruppen von Wagen (11) sich über die Breite der mindestens zwei Wagengruppen erstrecken.

6. Gerät nach Anspruch 1, dadurch gekennzeichnet, daß jeder der auf den seitlichen Führungselementen (12) entlang einem Endlosweg verschiebbaren Wagen (11) einen zentralen Körper (14) aufweist, an dem es schwenkbare Zwischenabschnitte von Hebeln (16) gibt, die jeweils ein Paar Drehelemente oder Räder (15) für einen Wälzeingriff auf den Führungselementen (12) tragen.

7. Gerät nach Anspruch 1, dadurch gekennzeichnet, daß das Endlos-Schleppelement (21) einer ersten Gruppe von Wagen (11) durch ein mit einem ersten Motor (33) verbundenes und auf die Antriebsriemenscheibe (22) der ersten Gruppe von Wagen (11) wirkendes Riemengetriebe (36) angetrieben wird, wobei das Endlos-Schleppelement (121) der zweiten Gruppe von Wagen (11) durch einen zweiten Motor (34) angetrieben wird, dessen Ausgangswelle (37) direkt auf die Antriebsriemenscheibe (22) des zweiten Endlos-Schleppgliedes (121) wirkt.

8. Gerät nach Anspruch 1, dadurch gekennzeichnet, daß das Endlos-Schleppelement (21) einer ersten Gruppe von Wagen (11) durch ein mit einem ersten Motor (33) verbundenes und auf die Antriebsriemenscheibe (22) der ersten Gruppe von Wagen (11) wirkendes Riemengetriebe (36) angetrieben wird, wobei das Endlos-Schleppelement (121) der zweiten Gruppe von Wagen durch einen zweiten Motor (34) angetrieben wird, dessen Ausgangswelle koaxial durch die Antriebsriemenscheibe (22) der ersten Gruppe von Wagen (11) verläuft, um auf die Antriebsriemenscheibe des zweiten Endlos-Schleppelements (121) zu wirken.

9. Gerät nach Anspruch 1, dadurch gekennzeichnet, daß es mindestens drei Wagengruppen (11) mit mindestens zwei miteinander verbundenen Wagen aufweist, wobei jede Wagengruppe durch einen jeweiligen Motor (33, 34, 35) angetrieben wird, der nicht nur in Übereinstimmung mit mindestens einer Ladezone (A) für die Wagengruppen und einer Entladezone (B) für die Wagengruppen, sondern auch in Übereinstimmung mit einer dazwischenliegenden Parkzone (C) schrittweise oder kontinuierlich betrieben werden kann, wobei Sensoren vorgesehen sind, um die Position der Wagengruppen zu steuern und die Motoren (33, 34, 35) selektiv zu betreiben.

10. Gerät nach Anspruch 1, dadurch gekennzeichnet, daß jedes Produkt- oder Paketträgerelement (27) mittels frei austauschbarer wechselseitiger Befestigungselemente auf einem entsprechenden Wagen angeordnet werden kann.

11. Gerät nach Anspruch 10, dadurch gekennzeichnet, daß die frei austauschbaren wechselseitigen Befestigungselemente elastisch belastbare Eingriffstifte (28) aufweisen, die auf dem Wagen (11) oder dem Trägerelement (27) vorgesehen sind und in in dem Trägerelement oder dem Wagen jeweils vorgesehene Sitze (29) eingesetzt werden können, wobei die Stifte (28) über Greifknöpfe (31) betätigt werden.

12. Gerät nach Anspruch 1, dadurch gekennzeichnet, daß die Trägerelemente (27) der mindestens zwei Wagengruppen sich alle auf der gleichen Längsachse befinden.

13. Gerät nach Anspruch 1, dadurch gekennzeichnet, daß die mindestens zwei Wagengruppen sich unabhängig voneinander bewegen.

14. Gerät nach Anspruch 2, dadurch gekennzeichnet, daß jeder Riemen (21, 121, 221) zwei gegenüberliegende freie Enden (55) aufweist, die an einer sich unter dem ersten Wagen (11) der Wagengruppen erstreckenden Ankervorrichtung (51, 52) befestigt sind.

15. Gerät nach Anspruch 14, dadurch gekennzeichnet, daß die Ankervorrichtung eine Ankerplatte (51) aufweist, die an einem umgekehrten doppelten T-förmigen Befestigungselement (52) mittels einer geschlitzten Stiftanordnung (56, 57) befestigt werden können, wobei das Befestigungselement (52) mit zwei Haltern (53) versehen ist, die die freien Enden (55) des Riemens (21, 121, 221) festhalten können.

16. Gerät nach Anspruch 15, dadurch gekennzeichnet, daß die Enden (55) des Riemens (21, 121, 221) durch gezahnte Platten (58) und Befestigungsschrauben (59) an den Haltern befestigt sind.

## Revendications

1. Appareil destiné a traiter automatiquement des produits ou paquets comprenant une structure de support (13) sur laquelle sont positionnés des chariots (11) munis d'éléments (27) pour transporter des produits ou paquets, ces chariots (11) étant sur un circuit sans fin en entraînement relatif, de sorte que les chariots (11) sont groupés en au moins deux groupes d'au moins deux chariots (11) reliés ensemble, dans chaque groupe un premier chariot (11) étant entraîné, en étant accouplé à un élément de traction sans fin indépendant (21, 121, 221) s'étendant sur deux poulies (22, 23) et entraîné par un moteur respectif (33, 34, 35) qui peut être actionné en pas à pas ou de façon continue entre au moins une zone de chargement A pour les groupes de chariots, une zone de déchargement B pour les groupes de chariots, caractérisé en ce que les chariots (11) sont coulissables sur des éléments de guidage latéraux (12) et en ce qu'au moins un second chariot est tracté par le premier chariot.

2. Appareil selon la revendication 1, caractérisé en ce que l'élément de traction sans fin est une courroie dentée (21, 121, 221) qui passe sur des poulies crantées respectives (22, 23) l'une (22) de ces poulies étant entraînée par un moteur relatif (33, 34, 35).

3. Appareil selon la revendication 2, caractérisé en ce que chaque courroie (21, 121, 221), comprend un appendice s'étendant vers l'extérieur (20) sur lequel est fixé le premier chariot (11) des groupes de chariots.

4. Appareil selon la revendication 1, caractérisé en ce que le second chariot (11) de chaque groupe est fixé sur le premier chariot (11) par un raccord articulé remplaçable (24, 26) de longueur variable de façon à faire varier la distance entre les axes des chariots.

5. Appareil selon la revendication 1, caractérisé en ce que les éléments porteurs de produits ou de paquets (27) d'au moins deux groupes de chariots (11) s'étendent au-dessus de la largeur d'au moins deux groupes de chariots.

6. Appareil selon la revendication 1, caractérisé en ce que chacun des chariots (11), coulissable sur des éléments de guidage latéraux (12) le long d'un circuit sans fin, comprend un corps central (14) sur lequel pivotent des portions intermédiaires de leviers (16) portant chacune une paire d'éléments tournant ou de roues (15) pour l'engagement par roulement sur les éléments de guidage (12).

7. Appareil selon la revendication 1, caractérisé en ce que l'élément de traction sans fin (21) d'un premier groupe de chariots (11) est entraîné par une transmission à courroie (36) raccordée à un premier moteur (33) et agissant sur la poulie d'entraînement (22) du premier groupe de chariots (11), l'élément de traction sans fin (121) du second groupe de chariots (11) étant entraîné par un second moteur (34), dont l'arbre de sortie (37) agit directement sur la poulie d'entraînement (22) du second élément de traction sans fin (121).

8. Appareil selon la revendication 1, caractérisé en ce que l'élément de traction sans fin (21) d'un premier groupe de chariots (11) est entraîné par une transmission à courroie (36), raccordée au premier moteur (33) et agissant sur la poulie d'entraînement (22) du premier groupe de chariots (11), l'élément de traction sans fin (121), du second groupe de chariots (11) étant entraîné par un second moteur (34), dont l'arbre de sortie traverse coaxialement la poulie d'entraînement (22) du premier groupe de chariots (11) pour agir sur la poulie d'entraînement du second élément de traction sans fin (121).

9. Appareil selon la revendication 1, caractérisé par le fait de comprendre au moins trois groupes de chariots (11) d'au moins deux chariots raccordés ensemble, chaque groupe de chariots étant entraîné par un moteur respectif (33, 34, 35) qui peut être actionné en pas à pas et de façon continue non seulement en correspondance avec au moins une zone de chargement (A) pour les groupes de chariots et une zone de déchargement (B) pour les groupes de chariots, mais également en correspondance avec une zone de stationnement intermédiaire (C), des capteurs étant prévus pour commander la position des groupes de chariots et pour actionner sélectivement les moteurs (33, 34, 36).

10. Appareil selon la revendication 1, caractérisé en ce que chaque élément porteur de produit ou de paquet (27) peut être positionné sur un chariot relatif au moyen d'éléments de fixation réciproque librement amovible.

11. Appareil selon la revendication 10, caractérisé en ce que les éléments de fixation réciproques librement amovibles comprennent des broches d'engagement pouvant être sollicitées élastiquement (28) disposées sur le chariot (11) ou l'élément porteur (27) et pouvant être introduites dans des sièges (29) prévus sur l'élément porteur ou le chariot respectivement, les broches (28) étant actionnées par l'intermédiaire de boutons de préhension (31).

12. Appareil selon la revendication 1, caractérisé en ce que les éléments porteurs (27) d'au moins deux groupes de chariots sont tous situés sur le même axe longitudinal.

13. Appareil selon la revendication 1, caractérisé en ce qu'au moins deux groupes de chariots se déplacent indépendamment l'un de l'autre.

14. Appareil selon la revendication 2, caractérisé en ce que chaque courroie (21, 121, 221) possède deux extrémités libres opposées (55) qui sont fixées sur le dispositif d'ancrage (51, 52) s'étendant sous le premier chariot (11) du groupe de chariot.

15. Appareil selon la revendication 14, caractérisé en ce que le dispositif d'ancrage comprend une plaque d'ancrage (51) pouvant être fixée sur un élément de fixation en forme de T double inversé (52) au moyen d'un agencement de goupilles fendues (56, 57), lequel élément de fixation (52) est muni de deux supports (53) pouvant fixer les extrémités libres (55) de la courroie (21, 121, 221).

16. Appareil selon la revendication 15, caractérisé en ce que les extrémités (55) de la courroie (21, 121, 221) sont fixées sur les supports au moyen de plaques crantées (58) et de vis de fixation (59).
